# EUROPÄISCHE PATENTANMELDUNG

(11) **EP 3 366 394 A1**
(43) Veröffentlichungstag der Anmeldung: **29.08.2018**
(21) Anmeldenummer: 17157632.5
(22) Anmeldetag: 23.02.2017
(51) Int. Cl.: B22F 5/00, F16D 1/06, B22F 3/24

(54) **BAUTEILANORDNUNG UND VERFAHREN ZUR HERSTELLUNG**

(71) Anmelder: Schunk Sintermetalltechnik GmbH, 06502 Thale (DE)
(72) Erfinder: MÜLLER, Sieglinde, 06502 Thale (DE); ROSPLESCH, Oliver, 06484 Ditfurt (DE); MARTER, Egbert, 06485 Quedlinburg (DE); LANGER, Ingolf, 06484 Quedlinburg (DE)
(74) Vertreter: advotec.

(57) **Zusammenfassung**

Die Erfindung betrifft ein Verfahren zur Herstellung einer Bauteilanordnung sowie eine Bauteilanordnung, wobei die Bauteilanordnung als eine Welle-Nabe-Verbindung zwischen einer Welle und einem Rad ausgebildet wird, wobei die Welle-Nabe-Verbindung mittels einer kraftschlüssigen Verbindung der Welle mit dem Rad ausgebildet wird, wobei das Rad ein Sinterbauteil (10) aus Sinterstahl aufweist oder als dieses ausgebildet wird, wobei durch Pressen von Stahlpulver in einer Matrize ein Pressformkörper und nachfolgendes Sintern des Pressformkörpers das Sinterbauteil ausgebildet wird, wobei nach dem Sintern des Pressformkörpers zu dem Sinterbauteil auf einer Kontaktfläche (12) der Welle-Nabe-Verbindung des Sinterbauteils mittels eines Lasers eine Oberflächenstruktur (13) ausgebildet wird, wobei die Oberflächenstruktur mit spitzenartigen Materialerhöhungen aus martensitischem Gefüge (16) ausgebildet wird.

## Beschreibung

Die Erfindung betrifft eine Bauteilanordnung sowie ein Verfahren zu deren Herstellung, wobei die Bauteilanordnung als eine Welle-Nabe-Verbindung zwischen einer Welle und einem Rad ausgebildet wird, wobei die Welle-Nabe-Verbindung mittels einer kraftschlüssigen Verbindung der Welle mit dem Rad ausgebildet wird, wobei das Rad ein Sinterbauteil aus Sinterstahl aufweist oder als dieses ausgebildet wird, wobei durch Pressen von Stahlpulver in einer Matrize ein Pressformkörper und nachfolgendes Sintern des Pressformkörpers das Sinterbauteil ausgebildet wird.

Kraftschlüssige bzw. reibschlüssige Welle-Nabe-Verbindungen sind aus dem Stand der Technik hinreichend bekannt und umfassen stets eine Welle und eine Nabe bzw. ein Rad, welches unmittelbar oder gegebenenfalls unter Zuhilfenahme weiterer Bauteile fest mit der Welle verbunden ist. Die weiteren Bauteile können beispielsweise eine Buchse sein, die mit der Welle oder dem Rad kraftschlüssig verbunden ist bzw. diese verbindet.

Die kraftschlüssige Verbindung kann mittels Verspannen der Bauteile mit einer Dehnschraube oder auch dadurch ausgebildet werden, dass die jeweiligen Bauteile durch eine Presspassung miteinander fest verbunden werden. Die Welle-Nabe-Verbindung kann dabei als ein sogenannter Längspressverband oder als ein Querpressverband mittels Verschrauben oder Pressfügen ausgebildet werden. An den Verbindungsstellen der Bauteile bzw. der jeweiligen Kontaktflächen der Bauteile entsteht dann die Presspassung, über die Längs- und Querkräfte kraftschlüssig übertragen werden können. Eine Drehmomentübertragung ist dabei im Wesentlichen von einer Flächenpressung und einer Reibung zwischen den derart gefügten Bauteilen abhängig. Um eine ausreichende Drehfestigkeit zu erzielen, werden daher die jeweiligen Kontaktflächen mit einer definierten Rauheit ausgebildet.

Weiter ist es bekannt das Rad und/oder ein weiteres Bauteil zur Ausbildung der kraftschlüssigen Verbindung zwischen Welle und Rad als ein Sinterbauteil aus Sinterstahl auszubilden. Bei der Herstellung des Sinterbauteils wird Stahlpulver, gegebenenfalls unter Zugabe eines Binders, in eine Matrize gepresst, so dass ein formstabiler Pressformkörper ausgebildet wird. Dieser Pressformkörper wird nachfolgend gesintert, wodurch das Sinterbauteil ausgebildet wird. Derartige Sinterbauteile sind in großer Stückzahl einfach und kostengünstig herstellbar. Nachteilig bei den bekannten Bauteilanordnungen bzw. Welle-Nabe-Verbindungen mit einem Sinterbauteil ist, dass eine kraftschlüssige bzw. reibschlüssige Verbindung zur Übertragung hoher Drehmomente mit dem Sinterbauteil nur eingeschränkt ausgebildet werden kann. So kann das Sinterbauteil aufgrund seines Gefüges bzw. seiner Kornstruktur weniger tragfähig sein, wodurch eine Flächenpressung der jeweiligen Kontaktflächen, und damit eine Drehfestigkeit, begrenzt ist. Dieser Nachteil kann auch durch eine Anpassung bzw. Erhöhung einer Rauigkeit der Kontaktfläche des Sinterbauteils nicht zufriedenstellend kompensiert werden.

Der vorliegenden Erfindung liegt daher die Aufgabe zugrunde, ein Verfahren zur Herstellung einer Bauteilanordnung sowie eine Bauteilanordnung vorzuschlagen, das bzw. die eine verbesserte Drehfestigkeit einer Welle-Nabe-Verbindung mit einfachen Mitteln ermöglicht.

Diese Aufgabe wird durch ein Verfahren mit dem Merkmal des Anspruchs 1 und eine Bauteilanordnung mit den Merkmalen des Anspruchs 15 gelöst.

Bei dem erfindungsgemäßen Verfahren zur Herstellung einer Bauteilanordnung wird die Bauteilanordnung als eine Welle-Nabe-Verbindung zwischen einer Welle und einem Rad ausgebildet, wobei die Welle-Nabe-Verbindung mittels einer kraftschlüssigen bzw. reibschlüssigen Verbindung der Welle mit dem Rad ausgebildet wird, wobei das Rad ein Sinterbauteil aus Sinterstahl aufweist oder als dieses ausgebildet wird, wobei durch Pressen von Stahlpulver in einer Matrize ein Pressformkörper und nachfolgendem Sintern des Pressformkörpers das Sinterbauteil ausgebildet wird, wobei nach dem Sintern des Pressformkörpers zu dem Sinterbauteil auf einer Kontaktfläche der Welle-Nabe-Verbindung des Sinterbauteils mittels eines Lasers eine Oberflächenstruktur ausgebildet wird, wobei die Oberflächenstruktur mit spitzenartigen Materialerhöhungen aus martensitischem Gefüge ausgebildet wird.

Demnach wird das Sinterbauteil zur Ausbildung der kraftschlüssigen Verbindung der Welle mit dem Rad verwendet, wobei die Welle oder das Rad selbst auch das Sinterbauteil aus Sinterstahl sein kann. Gleichwohl kann das Sinterbauteil auch ein Bauteil sein, welches an der Welle oder dem Rad fest angeordnet ist und zu deren Verbindung dient. Das Sinterbauteil wird bereits durch einfaches Pressen von Stahlpulver in der Matrize zu einem Pressformkörper und dem nachfolgenden Sintern des Pressformkörpers ausgebildet. So ist es möglich das zur Ausbildung der Welle-Nabe-Verbindung verwendete Sinterbauteil in großer Stückzahl kostengünstig herzustellen. Vor einer Ausbildung einer Pressverbindung der Welle-Nabe-Verbindung ist erfindungsgemäß vorgesehen das Sinterbauteil auf der Kontaktfläche der dann ausgebildeten Pressverbindung mittels des Lasers zu bearbeiten. Dabei wird ein Laser verwendet, der zumindest geeignet ist die Kontaktfläche so weit zu verändern, dass durch partielles Aufschmelzen und Verdampfen von Material des Sinterbauteils die Oberflächenstruktur ausgebildet wird. Bei der Bearbeitung der Kontaktoberfläche mittels des Lasers entstehen spitzenartige Materialerhöhungen, wobei diese Materialerhöhungen aus überwiegend martensitischem Gefüge ausgebildet sind. Die durch ein Aufschmelzen bzw. Aufwerfen von Material über ein ursprüngliches Niveau einer Oberfläche des Sinterbauteils ausgebildeten Materialerhöhungen werden infolge der partiell auf die Kontaktfläche aufgebrachte Laserenergie kurzzeitig erhitzt, wobei es zu einer zumindest teilweisen, vorzugsweise vollständigen Umwandlung von ferritischem Gefüge des Sinterstahls zu dem martensitischen Gefüge bei einer ebenso schnellen Abkühlung der Materialerhöhungen kommt. Während einer Erwärmung des ferritischen Gefüges wird austenitisches Gefüge gebildet, welches sich nachfolgend in martensitisches Gefüge umwandelt. So wird es möglich Materialerhöhungen auf der Kontaktfläche auszubilden, die eine besonders große Härte, im Wesentlichen unabhängig von einer Härte des übrigen Sinterbauteils, aufweisen. Diese Materialerhöhungen können sich daher auch besonders gut in eine Kontaktfläche eines weiteren Bauteils der Welle-Nabe-Verbindung eindrücken, so dass mit dieser vergleichsweise einfachen Oberflächenbehandlung ein hoher Reibwert und damit eine besonders verdrehsichere, kraftschlüssige Verbindung der Welle mit dem Rad ausgebildet werden kann.

Demnach können mittels des Lasers eine Ausbildung und eine Härtung der Materialerhöhungen erfolgen. Diese Ausbildung und Härtung kann in einem Arbeitsschritt zur Ausbildung der Oberflächenstruktur mit dem Laser durchgeführt werden.

Das Sinterbauteil kann mit einer Härte von 80 bis 250 HB, vorzugsweise von 100 bis 200 HB ausgebildet werden. Die hier angegebene Härte nach EN ISO 6506-1 bis EN ISO 6506-4 wird als Härte des Sinterbauteils mit Ausnahme der Materialerhöhungen verstanden. Das Sinterbauteil kann so vergleichsweise weich und zäh bzw. weniger hart ausgebildet sein, wodurch sich eine Bruchfestigkeit der Welle-Nabe-Verbindung verbessern lässt.

Das Rad kann härter als das Sinterbauteil ausgebildet sein. Wenn das Sinterbauteil eine Buchse ist, können die Welle und das Rad härter als das Sinterbauteil ausgebildet sein. Auch dann ist es noch möglich, dass sich die spitzenartigen Materialerhöhungen in eine Kontaktfläche der Welle oder des Rads eindrücken können.

Vorteilhaft ist es, wenn das Rad aus Stahl ausgebildet wird. So kann das Rad auch aus Sinterstahl als das Sinterbauteil ausgebildet werden.

Die Materialerhöhungen aus martensitischem Gefüge können mit einer Härte von ≥ 700 HV 0,01, vorzugsweise von ≥ 800 HV 0,01 ausgebildet werden. Unter einer Härte nach DIN EN ISO 6507-1:2005 bis -4:2005, gemessen mit einer Prüfkraft von 0,01 kp, wird hier eine alleine an den Materialerhöhungen gemessene Härte verstanden. Die Härte der Materialerhöhungen kann somit wesentlich größer sein als eine Härte des übrigen Sinterbauteils, wodurch ein Eindringen der Materialerhöhungen in eine gegenüberliegende Kontaktfläche begünstigt wird.

Die Kontaktfläche kann mit einer Rauheit bzw. gemittelten Rautiefe von RZ 5 µm bis 100 µm, vorzugsweise 20 µm bis 60 µm ausgebildet werden. Eine derartige Rauheit kann einfach mit einem Laser, der beispielsweise in einer kontinuierlichen Bewegungsabfolge die Kontaktfläche bearbeitet, ausgebildet werden. Auch kann vorgesehen sein, dass der Laser als Oberflächenstruktur ein Bearbeitungsmuster auf der Kontaktfläche ausbildet. Die dann in jeweils diesen bearbeiteten Bereichen erzielte Rauheit erhöht vorteilhaft einen Reibwert der Kontaktfläche.

Das Sinterbauteil kann mit einem Kohlenstoffgehalt von 0,3 bis 1,5 Gew.-%, vorzugsweise 0,4 bis 0,9 Gew.-% ausgebildet werden. Das Sinterbauteil kann diesen Kohlenstoffgehalt zumindest im Bereich der Kontaktfläche aufweisen. Vorzugsweise weist das gesamte Sinterbauteil den vorgenannten Kohlenstoffgehalt auf. So kann sichergestellt werden, dass eine Härtung der Materialerhöhungen erfolgen kann.

Das Sinterbauteil kann weiter mit einem Kupfergehalt von 1 bis 2 Gew.-% ausgebildet werden. Durch eine Zugabe von Kupfer in Pulverform kann eine Herstellung des Sinterbauteils erleichtert werden.

Das Sinterbauteil kann nach dem ersten Sintern noch einmal in einer Matrize gepresst und nachfolgend noch einmal gesintert werden. Insgesamt kann so eine höhere Verdichtung des Materials des Sinterbauteils erzielt werden.

Weiter kann das Sinterbauteil vor der Ausbildung der Oberflächenstruktur dampfbehandelt werden.

Auch kann das Sinterbauteil, vorzugsweise in einer Matrize, kalibriert werden. So wird es möglich besonders maßhaltige Sinterbauteile herzustellen.

Weiter ist es jedoch auch möglich unmittelbar nach dem Sintern die Oberflächenstruktur auszubilden. Auf eventuelle weitere Arbeitsschritte nach dem Sintern kann daher zur Ausbildung der Oberflächenstruktur verzichtet werden, wodurch das Verfahren besonders kostengünstig durchführbar wird.

Die Welle kann eine Kurbelwelle oder eine andere Welle eines Verbrennungsmotors sein, wobei das Rad ein Zahnrad, ein Kettenrad oder ein Riemenrad sein kann, wobei die kraftschlüssige Verbindung der Welle-Nabe-Verbindung durch eine Schraubverbindung oder durch Pressfügen als eine Stirnpressverbindung, eine Kegelpressverbindung, oder eine Zylinderpressverbindung ausgebildet werden kann. Beispielsweise kann ein Verbrennungsmotor die Kurbelwelle bzw. Welle mit der Welle-Nabe-Verbindung aufweisen.

Die erfindungsgemäße Bauteilanordnung ist als eine Welle-Nabe-Verbindung zwischen einer Welle und einem Rad ausgebildet, wobei die Welle-Nabe-Verbindung mittels einer kraftschlüssigen Verbindung der Welle mit dem Rad ausgebildet ist, wobei das Rad ein Sinterbauteil aus Sinterstahl aufweist oder als dieses ausgebildet ist, wobei das Sinterbauteil durch Pressen von Stahlpulver in einer Matrize zu einem Pressformkörper und nachfolgendes Sintern des Pressformkörpers ausgebildet ist, wobei auf einer Kontaktfläche der Welle-Nabe-Verbindung des Sinterbauteils mittels eines Lasers eine Oberflächenstruktur ausgebildet ist, wobei die Oberflächenstruktur mit spitzenartigen Materialerhöhungen aus martensitischem Gefüge ausgebildet ist. Hinsichtlich der Vorteile der erfindungsgemäßen Bauteilanordnung wird auf die Vorteilsbeschreibung des erfindungsgemäßen Verfahrens verwiesen. Weitere vorteilhafte Ausführungsformen einer Bauteilanordnung ergeben sich aus den Merkmalen der auf den Anspruch 1 rückbezogenen Unteransprüche.

Nachfolgend wird die Erfindung unter Bezugnahme auf die beigefügten Zeichnungen näher erläutert.

Es zeigen:
- **Fig. 1**: ein Schliffbild eines Sinterbauteils quer zu einer Kontaktfläche;
- **Fig. 2**: eine Vergrößerung einer Oberflächenstruktur einer Kontaktfläche eines Sinterbauteils;
- **Fig. 3**: eine Vergrößerung einer Kontaktfläche eines weiteren Bauteils.

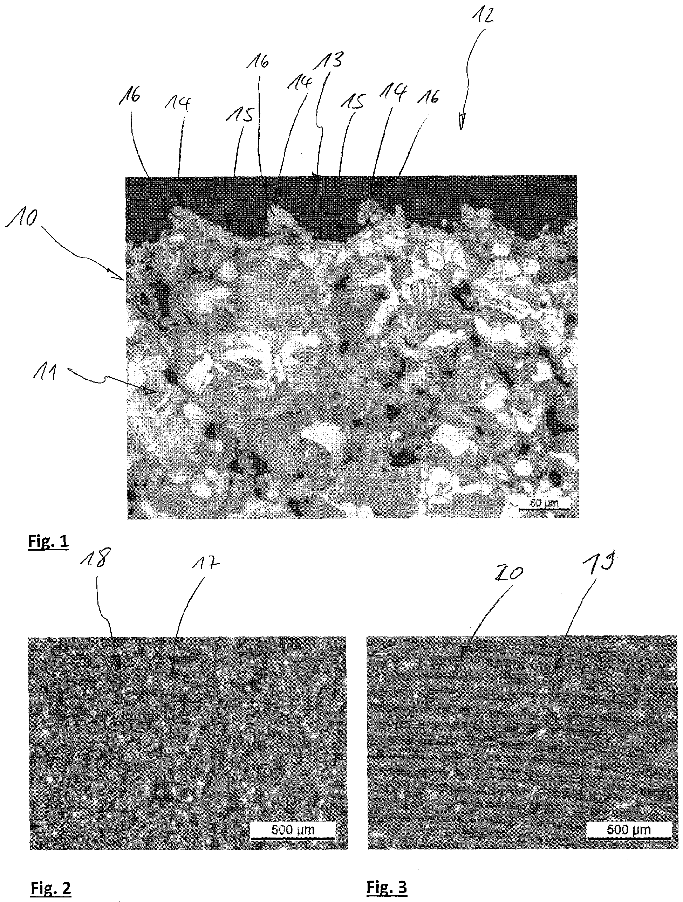

Die **Fig. 1** zeigt ein Schliffbild eines hier nur abschnittsweise dargestellten Sinterbauteils 10 mit einem Gefüge 11 und einer Kontaktfläche 12.

Auf der Kontaktfläche 12 wurde mittels eines hier nicht dargestellten Lasers eine Oberflächenstruktur 13 mit Materialerhöhungen 14 mit zwischenliegenden Vertiefungen 15 ausgebildet. Die Materialerhöhungen 14 sind insbesondere mit einem martensitischem Gefüge 16 ausgebildet.

Die **Fig. 2** zeigt eine Kontaktfläche 17 eines hier nicht weiter dargestellten Sinterbauteils mit einer Oberflächenstruktur 18, die mit hier nicht näher ersichtlichen spitzenartigen Materialerhöhungen ausgebildet ist. Die Kontaktfläche 17 wurde mit einem Laser strukturiert, so dass die Materialerhöhungen ein martensitisches Gefüge aufweisen. Die Kontaktfläche 17 wurde mit der in **Fig. 3** dargestellten Kontaktfläche 19 zur Ausbildung einer Welle-Nabe-Verbindung kontaktiert, wobei bei einem Lösen der Welle-Nabe-Verbindung in der Kontaktfläche 19, infolge der harten, spitzenartigen Materialerhöhungen der Kontaktfläche 17, Riefen bzw. raue Strukturen 20 ausgebildet sind.

## Patentansprüche

1. Verfahren zur Herstellung einer Bauteilanordnung, wobei die Bauteilanordnung als eine Welle-Nabe-Verbindung zwischen einer Welle und einem Rad ausgebildet wird, wobei die Welle-Nabe-Verbindung mittels einer kraftschlüssigen Verbindung der Welle mit dem Rad ausgebildet wird, wobei das Rad ein Sinterbauteil (10) aus Sinterstahl aufweist oder als dieses ausgebildet wird, wobei durch Pressen von Stahlpulver in einer Matrize ein Pressformkörper und nachfolgendes Sintern des Pressformkörpers das Sinterbauteil ausgebildet wird,
**dadurch gekennzeichnet,**
**dass** nach dem Sintern des Pressformkörpers zu dem Sinterbauteil auf einer Kontaktfläche (12, 17) der Welle-Nabe-Verbindung des Sinterbauteils mittels eines Lasers eine Oberflächenstruktur (13, 18) ausgebildet wird, wobei die Oberflächenstruktur mit spitzenartigen Materialerhöhungen (14) aus martensitischem Gefüge (16) ausgebildet wird.

2. Verfahren nach Anspruch 1,
**dadurch gekennzeichnet,**
**dass** mittels des Lasers eine Ausbildung und eine Härtung der Materialerhöhungen (14) erfolgt.

3. Verfahren nach Anspruch 1 oder 2,
**dadurch gekennzeichnet,**
**dass** das Sinterbauteil (10) mit einer Härte von 80 bis 250 HB, vorzugsweise von 100 bis 200 HB ausgebildet wird.

4. Verfahren nach einem der vorangehenden Ansprüche,
**dadurch gekennzeichnet,**
**dass** das Rad härter als ein Grundgefüge des Sinterbauteils (10) ausgebildet ist.

5. Verfahren nach einem der vorangehenden Ansprüche,
**dadurch gekennzeichnet,**
**dass** das Rad aus Stahl ausgebildet wird.

6. Verfahren nach einem der vorangehenden Ansprüche,
**dadurch gekennzeichnet,**
**dass** die Materialerhöhungen (14) aus martensitischem Gefüge (16) mit einer Härte von ≥ 700 HV 0,01, vorzugsweise von ≥ 800 HV 0,01 ausgebildet werden.

7. Verfahren nach einem der vorangehenden Ansprüche,
**dadurch gekennzeichnet,**
**dass** die Kontaktfläche (12, 17) mit einer Rauheit von Rz 5 bis 100 µm, vorzugsweise 20 bis 60 µm ausgebildet wird.

8. Verfahren nach einem der vorangehenden Ansprüche,
**dadurch gekennzeichnet,**
**dass** das Sinterbauteil (10) mit einem Kohlenstoffgehalt von 0,3 bis 1,5 Gew. %, vorzugsweise 0,4 bis 0,9 Gew. % ausgebildet wird.

9. Verfahren nach einem der vorangehenden Ansprüche,
**dadurch gekennzeichnet,**
**dass** das Sinterbauteil (10) mit einem Kupfergehalt von 1 bis 2 Gew. % ausgebildet wird.

10. Verfahren nach einem der vorangehenden Ansprüche,
**dadurch gekennzeichnet,**
**dass** das Sinterbauteil (10) nach dem Sintern noch einmal in einer Matrize gepresst und nachfolgend noch einmal gesintert wird.

11. Verfahren nach einem der vorangehenden Ansprüche,
**dadurch gekennzeichnet,**
**dass** das Sinterbauteil (10) vor der Ausbildung der Oberflächenstruktur (13, 18) dampfbehandelt wird.

12. Verfahren nach einem der vorangehenden Ansprüche,
**dadurch gekennzeichnet,**
**dass** das Sinterbauteil (10) kalibriert wird.

13. Verfahren nach einem der Ansprüche 1 bis 10,
**dadurch gekennzeichnet,**
**dass** unmittelbar nach dem Sintern die Oberflächenstruktur (13, 18) ausgebildet wird.

14. Verfahren nach einem der vorangehenden Ansprüche,
**dadurch gekennzeichnet,**
**dass** das Rad ein Zahnrad, ein Kettenrad oder ein Riemenrad ist, wobei die kraftschlüssige Verbindung der Welle-Nabe-Verbindung durch eine Schraubverbindung oder durch Pressfügen als eine Stirnpressverbindung, eine Kegelpressverbindung oder eine Zylinderpressverbindung ausgebildet wird.

15. Bauteilanordnung, wobei die Bauteilanordnung als eine Welle-Nabe-Verbindung zwischen einer Welle und einem Rad ausgebildet ist, wobei die Welle-Nabe-Verbindung mittels einer kraftschlüssigen Verbindung der Welle mit dem Rad ausgebildet ist, wobei das Rad ein Sinterbauteil (10) aus Sinterstahl aufweist oder als dieses ausgebildet ist, wobei das Sinterbauteil durch Pressen von Stahlpulver in einer Matrize zu einem Pressformkörper und nachfolgendes Sintern des Pressformkörpers ausgebildet ist,
**dadurch gekennzeichnet,**
**dass** auf einer Kontaktfläche (12, 17) der Welle-Nabe-Verbindung des Sinterbauteils mittels eines Lasers eine Oberflächenstruktur (13, 18) ausgebildet ist, wobei die Oberflächenstruktur mit spitzenartigen Materialerhöhungen (14) aus martensitischem Gefüge (16) ausgebildet ist.
